# EUROPEAN PATENT APPLICATION

(11) **EP 4 604 677 A1**
(43) Date of publication of application: **20.08.2025**
(21) Application number: 23877192.7
(22) Date of filing: 03.10.2023
(51) Int. Cl.: H05B 47/165, B60Q 1/34, B60Q 1/38, H05B 47/105, H05B 47/16, H05B 47/20

(54) **LIGHTING CIRCUIT**

(30) Priority: 13.10.2022 JP 2022164727
(71) Applicant: Koito Manufacturing Co., Ltd., Tokyo 141-0001 (JP)
(72) Inventor: KITAGAWA, Yuta, Shizuoka-shi, Shizuoka 424-8764 (JP); YAMADA, Yukiya, Shizuoka-shi, Shizuoka 424-8764 (JP); OHTA, Shinji, Shizuoka-shi, Shizuoka 424-8764 (JP)
(74) Representative: Maiwald GmbH
(86) International application number: PCT/JP2023/036039
(87) International publication number: WO 2024/080187

(57) **Abstract**

Alighting circuit applied to a vehicle lamp including a plurality of light sources, the lighting circuit includes: a voltage divider circuit configured to divide a power supply voltage applied to a power supply line into a plurality of voltages different from one another; a timer circuit including a first resistor configured to receive the power supply voltage through the power supply line, and a first capacitor connected to the first resistor; a control circuit configured to sequentially turn on the plurality of light sources, based on the plurality of voltages of the voltage divider circuit and a voltage of the first capacitor; and a first discharge circuit configured to discharge the first capacitor during a first time period, in response to the power supply voltage being applied to the power supply line.

## Description

### [Technical Field]

The present disclosure relates to a lighting circuit.

### [Background Art]

As vehicle lamps, known are, for example, vehicle direction indicator lamps (hereinafter also referred to as "turn signal lamps") using a so-called sequential method of sequentially lighting multiple light sources (for example, Patent Literature 1). Power is supplied from a vehicle battery to lighting circuits that are applied to such vehicle lamps.

### [Citation List]

### [Patent Literature]

[PTL 1] International Publication No. WO 2016/104282

### [Summary of Invention]

### [Technical Problem]

Vehicles are generally provided with turn signal lamps on the left and right sides at the front of the vehicle body, and on the left and right sides at the rear of the vehicle body; power is supplied from the battery to each of them. However, since the wiring lengths from the battery to respective turn signal lamps are different, there may be a lag in lighting timing caused by differences in wiring resistance, and the like.

The present disclosure is directed to provision of a lighting circuit capable of improving the accuracy of lighting timing.

### [Solution to Problem]

Main aspect of the present disclosure is a lighting circuit applied to a vehicle lamp including a plurality of light sources, the lighting circuit comprising: a voltage divider circuit configured to divide a power supply voltage applied to a power supply line into a plurality of voltages different from one another; a timer circuit including a first resistor configured to receive the power supply voltage through the power supply line, and a first capacitor connected to the first resistor; a control circuit configured to sequentially turn on the plurality of light sources, based on the plurality of voltages of the voltage divider circuit and a voltage of the first capacitor; and a first discharge circuit configured to discharge the first capacitor during a first time period, in response to the power supply voltage being applied to the power supply line.

### [Advantageous Effects of Invention]

According to the present disclosure, it is possible to provide a lighting circuit capable of improving the accuracy of lighting timing.

### [Brief Description of Drawings]

[Fig. 1] Fig. 1 is a diagram illustrating a configuration of a vehicle lamp 1 including a lighting circuit 10 according to an embodiment of the present disclosure.
[Fig. 2] Fig. 2 is a diagram illustrating an example of a turn-off circuit 13.
[Fig. 3] Fig. 3 is a diagram illustrating an example of a timer circuit 15 and a discharge circuit 16.
[Fig. 4] Fig. 4 is a diagram illustrating an example of a reset circuit 17.
[Fig. 5A] Fig. 5A is a diagram illustrating an example of a switch circuit 18.
[Fig. 5B] Fig. 5B is a diagram illustrating an example of a switch circuit 19.
[Fig. 6] Fig. 6 is a diagram for explaining an operation of a lighting circuit 10.

### [Description of Embodiments]

### <Cross-Reference to Related Applications>

This application claims priority based on Japanese Patent Application No. 2022-164727, filed on October 13, 2022, and incorporates the contents thereof by reference.

At least the following matters will become apparent from the description of the present specification and the accompanying drawings.

In an embodiment of the present disclosure, "connecting" refers to a state of being electrically connected unless otherwise specified. Thus, "connecting" includes a case where two components are connected not only by wiring but also through a resistor, for example.

### =====Embodiment(s)=====

### <<Configuration of Vehicle Lamp 1>>

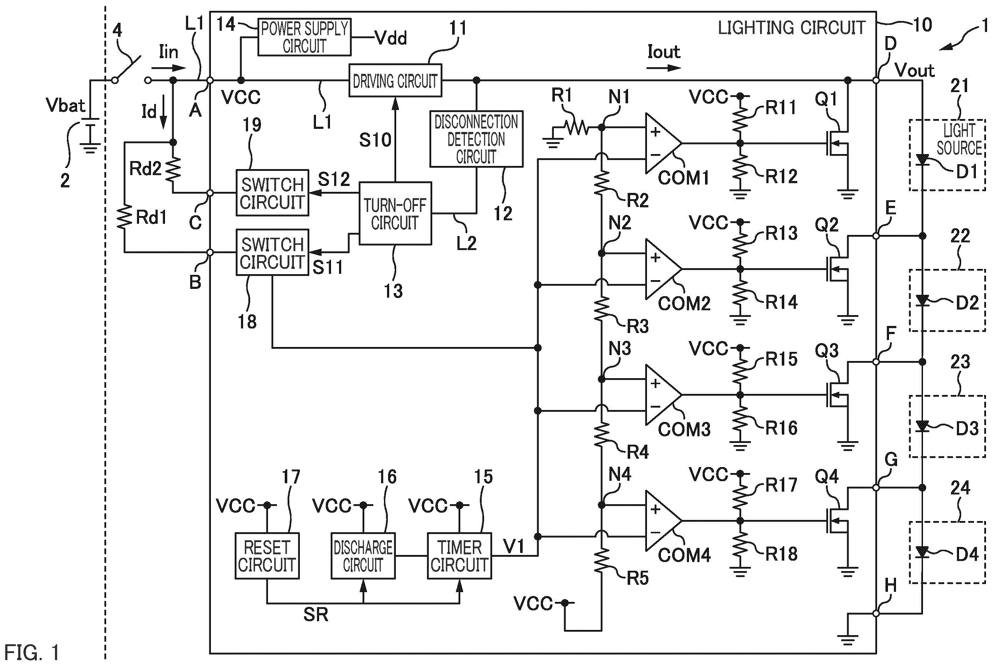

Fig. 1 is a diagram illustrating a configuration of a vehicle lamp 1 including a lighting circuit 10 according to an embodiment of the present disclosure.

The vehicle lamp 1 according to an embodiment of the present disclosure is a turn signal lamp (vehicle direction indicator lamp) in which light emitting elements of light sources are tuned on by a sequential method based on a voltage Vbat of a vehicle battery 2. The vehicle according to an embodiment of the present disclosure is provided with such vehicle lamps 1 having the same configuration as that in Fig. 1 at four locations, respectively: on the left and right sides at the front of the vehicle body and on the left and right sides at the rear of the vehicle body. Here, one of them will be described as an example.

The vehicle lamp 1 according to an embodiment of the present disclosure is used also as a hazard lamp. In the case of a turn signal, either the left or right lamp is turned on (blinks), and in the case of a hazard, all the lamps are tuned on (blink). In the following description, the vehicle lamp 1 may be simply referred to as lamp.

Here, generally, since the distances from the battery 2 to the respective lamps of the vehicle are not the same, the lengths of wirings (harnesses) for supplying power from the battery 2 to the respective lamps are different. For example, when the battery 2 is provided at the front of the vehicle, each of the wiring lengths from the battery 2 to the rear lamps is considerably longer than each of the wiring lengths from the battery 2 to the front lamps.

Due to such differences in the length of wiring to each of the lamps (in other words, differences in the magnitude of wiring resistance), there may be a lag in lighting timings of the respective lamps of the vehicle. Thus, in an embodiment of the present disclosure, the accuracy of the lighting timing is improved, as described below.

The vehicle lamp 1 includes a switch 4, a lighting circuit 10, light sources 21 to 24, and resistors Rd1 and Rd2.

The switch 4 is an element to apply the voltage Vbat of the vehicle battery 2 to a power supply line L1 of the vehicle lamp 1. The switch 4 employs, for example, a mechanical contact relay or a contactless relay using a semiconductor element.

The switch 4 has one end to receive the voltage Vbat of the battery 2 and the other end connected to the power supply line L1.

Thus, upon turning on of the switch 4, the voltage Vbat of the battery 2 is applied to the power supply line L1 through the switch 4. In an embodiment of the present disclosure, the voltage applied to the power supply line L1 by turning on the switch 4 is referred to as power supply voltage VCC. Hereinafter, the power supply voltage VCC may be abbreviated as voltage VCC.

On the other hand, upon turning off of the switch 4, the voltage VCC is not applied to the power supply line L1. As a result, for example, due to the influence of resistor(s), circuit(s),and/or the like between the power supply line L1 and the ground, the voltage of the power supply line L1 drops to zero.

In an embodiment of the present disclosure, all the lines (inside and outside the lighting circuit 10) connected to the switch 4 are defined as the power supply line L1. The power supply line L1 is wiring to supply the voltage VCC to an internal circuit of the lighting circuit 10. The vehicle lamp 1 is also provided with a ground line (not illustrated). Grounded portions in the circuits of the vehicle lamp 1 mean that they are connected to the ground line.

In response to the voltage VCC being applied to the power supply line L1, the lighting circuit 10 sequentially turns on the light sources 21 to 24 by a sequential method. Although details of the lighting circuit 10 will be described later, the lighting circuit 10 is a module in which multiple circuits to turn on the light sources 21 to 24 (light emitting elements D1 to D4) and terminals A to H are mounted to a substrate.

The light source 21 includes a light emitting element D1 to be turned on first. A light emitting diode (LED) is used for the light emitting element D1 according to an embodiment of the present disclosure. However, the light emitting element D1 is not limited to an LED, and may be, for example, another semiconductor light emitting element such as a laser diode (LD) or an organic EL element, or a halogen lamp (the same applies to the light emitting elements D2 to D4 described later). The anode of the light emitting element D1 is connected to a driving circuit 11 and an NMOS transistor Q1 (described later) through the terminal D of the lighting circuit 10. The cathode of the light emitting element D1 is connected to an NMOS transistor Q2 (described later) through the terminal E.

The light source 22 includes a light emitting element D2 to be turned on after the light emitting element D1 of the light source 21 is turned on. The anode of the light emitting element D2 is connected to the cathode of the light emitting element D1. The cathode of the light emitting element D2 is connected to an NMOS transistor Q3 (described later) through the terminal F.

The light source 23 includes a light emitting element D3 to be turned on after the light emitting element D2 of the light source 22 is turned on. The anode of the light emitting element D3 is connected to the cathode of the light emitting element D2. The cathode of the light emitting element D3 is connected to an NMOS transistor Q4 (described later) through the terminal G.

The light source 24 includes a light emitting element D4 to be turned on after the light emitting element D3 of the light source 23 is turned on. The anode of the light emitting element D4 is connected to the cathode of the light emitting element D3. The cathode of the light emitting element D4 is grounded through the terminal F.

The resistors Rd1 and Rd2 are resistors for adjusting the magnitude of an input current lin supplied from the vehicle battery 2 to the vehicle lamp 1, and in an embodiment of the present disclosure, the resistors Rd1 and Rd2 are provided outside the lighting circuit 10. The resistor Rd1 has one end connected to the power supply line L1, and the other end connected to a switch circuit 18 through the terminal B. The resistor Rd2 has one end connected to the power supply line L1, and the other end connected to a switch circuit 19 through the terminal C.

### <Allowable Range of Input Current>

The vehicle into which the vehicle lamp 1 according to an embodiment of the present disclosure is incorporated is provided with a detection device (not illustrated) to detect whether there is a disconnection in the light emitting elements D1 to D4 of the vehicle lamp 1 based on the input current lin from the battery 2. This detection device detects that there is a disconnection in any of the light emitting elements D1 to D4 of the vehicle lamp 1 when the current value of the input current lin is smaller than a threshold value (lower limit threshold value: hereinafter also referred to as lower limit value) while the vehicle lamp 1 is operating, for example.

Thus, the current value of the input current lin needs to be larger than the lower limit value so as not to erroneously detect a disconnection in the light emitting elements D1 to D4 while the vehicle lamp 1 is operating in a normal state. Here, the "normal state" refers to, for example, a state in which no disconnection occurs in the light emitting elements D1 to D4 of the light sources 21 to 24 of the vehicle lamp 1. "Disconnection of the light emitting element" refers to, for example, a state in which the resistance value between the cathode and anode of the light emitting element sufficiently exceeds the normal resistance value.

Meanwhile, if the power consumption in the vehicle lamp 1 exceeds more than necessary, the input current lin inputted to the vehicle lamp 1 also increases, and thus the current from the battery 2 may exceed the rated current, for example.

Accordingly, an upper limit threshold value (hereinafter also referred to as upper limit value) is also defined for the input current lin flowing from the battery 2 to the vehicle lamp 1 while the vehicle lamp 1 is operating.

Thus, in the vehicle lamp 1 according to an embodiment of the present disclosure, the input current lin supplied from the battery 2 needs to be within a range (allowable range) determined by the lower limit value and the upper limit value.

In response to power being supplied from the battery 2, the lighting circuit 10 according to an embodiment of the present disclosure turns on the light sources 21 to 24 by a sequential method while keeping the input current lin within the allowable range. Specifically, the magnitude of the input current lin is adjusted by an adjustment current Id, which will be described later.

### <<Configuration of Lighting Circuit 10>>

As illustrated in Fig. 1, the lighting circuit 10 includes the driving circuit 11, a disconnection detection circuit 12, a turn-off circuit 13, a power supply circuit 14, a timer circuit 15, a discharge circuit 16, a reset circuit 17, the switch circuits 18 and 19, resistors R1 to R5 and R11 to R18, comparators COM1 to COM4, the NMOS transistors Q1 to Q4, and the terminals A to H.

The driving circuit 11 is a regulator that generates a predetermined drive current lout to drive the light emitting elements D1 to D4 of the light sources 21 to 24, which are loads, based on the power supplied from the battery 2. The method of generating a constant current may be a switching method or a linear method.

The disconnection detection circuit 12 detects whether there is a disconnection in the light emitting elements D1 to D4 of the light sources 21 to 24 (that is, whether there is an abnormality in at least one of the light sources 21 to 24). The disconnection detection circuit 12 corresponds to a "detection circuit." Here, if any of the light emitting elements D1 to D4 is disconnected, the resistance value between the anode and cathode of the disconnected light emitting element results in increasing. In such a state, in response to the drive current lout being supplied to the light emitting elements D1 to D4, the output voltage Vout of the driving circuit 11 rises significantly. Thus, the presence or absence of an abnormality in the light sources 21 to 24 can be detected based on the output voltage Vout of the driving circuit 11.

The disconnection detection circuit 12 according to an embodiment of the present disclosure determines whether the output voltage Vout of the driving circuit 11 exceeds a predetermined value, for example, and detects that there is a disconnection in any of the light emitting elements D1 to D4, in response to the output voltage Vout exceeding the predetermined value. Upon detecting a disconnection, the disconnection detection circuit 12 changes the level of a connection line L2 connected to the turn-off circuit 13 from a high level (hereinafter, referred to as high or high level) to a low level (hereinafter, referred to as low or low level).

In response to the disconnection detection circuit 12 detecting a disconnection, the turn-off circuit 13 stops the operation of the driving circuit 11 so as to turn off the light sources 21 to 24. Further, the turn-off circuit 13 controls the switch circuits 18, 19 such that current does not flow through the resistors Rd1, Rd2, in order to prevent unnecessary power consumption by the resistors Rd1, Rd2 based on the detection result of a disconnection by the disconnection detection circuit 12. The details of the turn-off circuit 13 will be described later.

The power supply circuit 14 is a circuit that generates a voltage Vdd (for example, 5 V) to operate the circuits of the lighting circuit 10 based on the voltage VCC (for example, 13 V) of the power supply line L1.

In response to the voltage VCC being applied to the power supply line L1, the timer circuit 15 outputs a voltage that changes with time (voltage V1 described later). The details of the timer circuit 15 will be described later.

In response to the voltage VCC being applied to the power supply line L1, the discharge circuit 16 stops the operation of the timer circuit 15 by discharging a capacitor 52 (described later) of the timer circuit 15 for a certain time period. In an embodiment of the present disclosure, the discharge circuit 16 corresponds to a "first discharge circuit." Details of the discharge circuit 16 will be described later.

In response to the voltage VCC stopping being applied to the power supply line L1, the reset circuit 17 outputs a high signal SR to reset the circuits of the lighting circuit 10 for a certain time period. Based on the high signal SR, for example, the capacitor 52 (described later) of the timer circuit 15 and the capacitor 66 (described later) of the discharge circuit 16 are discharged. In an embodiment of the present disclosure, the reset circuit 17 corresponds to a "second discharge circuit." The details of the reset circuit 17 will be described later.

The switch circuits 18 and 19 are circuits to adjust the magnitude of the input current lin flowing through the power supply line L1 by electrically connecting or interrupting a current path for each of the resistors Rd1 and Rd2 to be grounded from the power supply line. In an embodiment of the present disclosure, the switch circuit 18 corresponds to a "first current adjustment circuit," and the resistor Rd1 corresponds to a "second resistor." The switch circuit 19 corresponds to a "second current adjustment circuit," and the resistor Rd2 corresponds to a "third resistor." Details of the switch circuits 18 and 19 will be described later.

The resistors R1 to R5 are connected in series between the power supply line L1 and the ground, and divide the voltage VCC applied to the power supply line L1 into multiple different voltages. The resistors R1 to R5 correspond to a "voltage divider circuit." As illustrated in Fig. 1, the resistors R5, R4, R3, R2, and R1 are connected in this order from the power supply line L1 (voltage VCC) side to the ground side. The connection point between the resistor R5 and the resistor R4 is referred to as node N4, the connection point between the resistor R4 and the resistor R3 is referred to as node N3, the connection point between the resistor R3 and the resistor R2 is referred to as node N2, and the connection point between the resistor R2 and the resistor R1 is referred to as node N1.

In response to the voltage VCC being applied to the power supply line L1, the resistors R1 to R5 generate a voltage obtained by dividing the voltage VCC at each of the connection points (nodes N1 to N4) of the resistors. The voltage at the node N4 is the highest, and the voltage at the node N1 is the lowest.

The voltages at the nodes (N1 to N4) of the resistors R1 to R5 are applied to the non-inverting input terminals (+ terminals) of the comparators COM1 to COM4, respectively. The output voltage of the timer circuit 15 (voltage V1 described later) is applied to each of the inverting input terminals (- terminals) of the comparators COM1 to COM4, respectively.

The comparators COM1 to COM4 each compare the magnitudes of the voltages at the - terminal and the + terminal, to thereby output a signal according to the comparison result. Specifically, the comparators COM1 to COM4 according to an embodiment of the present disclosure are of an open-drain type, and output an open (hereinafter, also referred to as high impedance) voltage if the voltage at the + terminal is larger than the voltage at the - terminal, or output low (ground level) voltage if the voltage at the + terminal is smaller than the voltage at the - terminal. The same applies to other comparators (comparators 61, 75, and 85) described later.

The resistors R11 and R12, resistors R13 and R14, resistors R15 and R16, and resistors R17 and R18 in each pair are connected in series, to thereby divide the voltage VCC in response to the voltage VCC being applied to the power supply line L1. In this event, the resistance values of the resistors (resistors R11 to R18) are respectively set so as to generate divided voltages to turn on the NMOS transistors Q1 to Q4.

The NMOS transistors Q1 to Q4 each have a function of a switch that is turned on and off according to the voltage applied to the gate thereof. In an embodiment of the present disclosure, the NMOS transistors Q1 to Q4 are elements that control turning on and off of the light sources 21 to 24, respectively.

The drain of the NMOS transistor Q1 is connected to the terminal D, and the source thereof is grounded. The gate of the NMOS transistor Q1 is connected to the connection point between the resistor R11 and the resistor R12, and is also connected to the output of the comparator COM1.

The drain of the NMOS transistor Q2 is connected to the terminal E, and the source thereof is grounded. The gate of the NMOS transistor Q2 is connected to the connection point between the resistor R13 and the resistor R14, and is also connected to the output of the comparator COM2.

The drain of the NMOS transistor Q3 is connected to the terminal F, and the source thereof is grounded. The gate of the NMOS transistor Q3 is connected to the connection point between the resistor R15 and the resistor R16, and is also connected to the output of the comparator COM3.

The drain of the NMOS transistor Q4 is connected to the terminal G, and the source thereof is grounded. The gate of the NMOS transistor Q4 is connected to the connection point between the resistor R17 and the resistor R18, and is also connected to the output of the comparator COM4.

For example, when the output of the comparator COM1 is low, the voltage at the connection point between the resistor R11 and the resistor R12 drops below the threshold voltage of the NMOS transistor Q1, and the NMOS transistor Q1 is turned off. On the other hand, when the output of the comparator COM1 is at high impedance, the divided voltage of the voltage VCC by the resistors R11 and R12 is applied to the gate of the NMOS transistor Q1, and the NMOS transistor Q1 is turned on. The respective relationship between the comparators COM2 to COM4 and the NMOS transistors Q2 to Q4 is the same, and thus the description thereof is omitted. The comparators COM1 to COM4, the resistors R11 to R18, and the NMOS transistors Q1 to Q4 correspond to a "control circuit."

### <Turn-off Circuit 13>

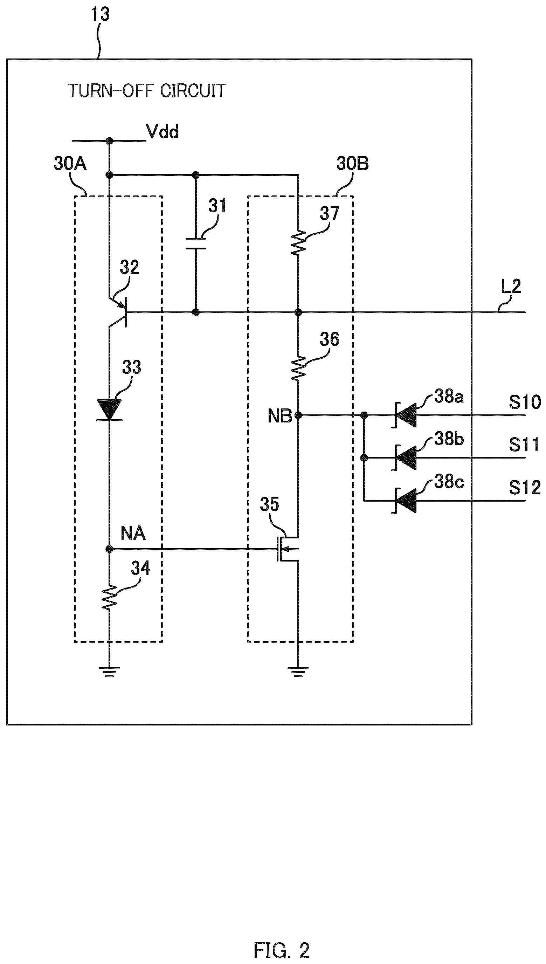

Fig. 2 is a diagram illustrating an example of the turn-off circuit 13.

The turn-off circuit 13 includes inverters 30A and 30B, a capacitor 31, and Schottky barrier diodes 38a to 38c.

The capacitor 31 is an element that is charged with the voltage Vdd being applied thereto and holds charges for operating the inverters 30A and 30B.

The inverter 30A is a circuit that inverts the logic level of the connection line L2 from the disconnection detection circuit 12 and outputs the result, and includes a PNP transistor 32, a diode 33, and a resistor 34 that are connected in series. For example, when the level at the connection line L2 is high, the PNP transistor 32 is turned off, and thus the level at a node NA at which the diode 33 and the resistor 34 are connected goes low. On the other hand, when the level of the connection line L2 is low, the PNP transistor 32 is turned on, and thus the node NA goes high.

The inverter 30B is a circuit that inverts the logic level at the node NA and outputs the result, and includes an NMOS transistor 35 and resistors 36 and 37 connected in series. Here, for example, when the level at the node NA is high, the NMOS transistor 35 is turned on, and thus the level at a node NB at which the NMOS transistor 35 and the resistor 36 are connected goes low. When the level of the node NA is low, the NMOS transistor 35 is turned off, and thus the level at the node NB goes high.

In an embodiment of the present disclosure, the node NA, which is the output of the inverter 30A, is connected to the gate electrode of the NMOS transistor 35, which is the input of the inverter 30B. The node between the resistors 36 and 37 of the inverter 30B and the base electrode of the PNP transistor 32, which is the input of the inverter 30A, are connected through the connection line L2. Accordingly, the turn-off circuit 13 operates as a holding circuit to hold the logic level of the connection line L2.

When there is a detection of disconnection and the turn-off circuit 13 holds the low signal, the Schottky barrier diode 38a generates, at its anode, a low signal S10 to stop the operation of the driving circuit 11.

When there is a detection of disconnection and the turn-off circuit 13 holds the low signal, the Schottky barrier diode 38b generates, at its anode, a low signal S11 to turn off an NMOS transistor 81 (described later) of the switch circuit 18.

When there is a detection of disconnection and the turn-off circuit 13 holds the low signal, the Schottky barrier diode 38c generates, at its anode, a low signal S12 to turn off an NMOS transistor 91 (described later) of the switch circuit 19.

Although the Schottky barrier diodes 38a to 38c are used in an embodiment of the present disclosure, they are not limited to Schottky barrier diodes, but for example, typical rectifier diodes may be used.

### <Timer Circuit 15>

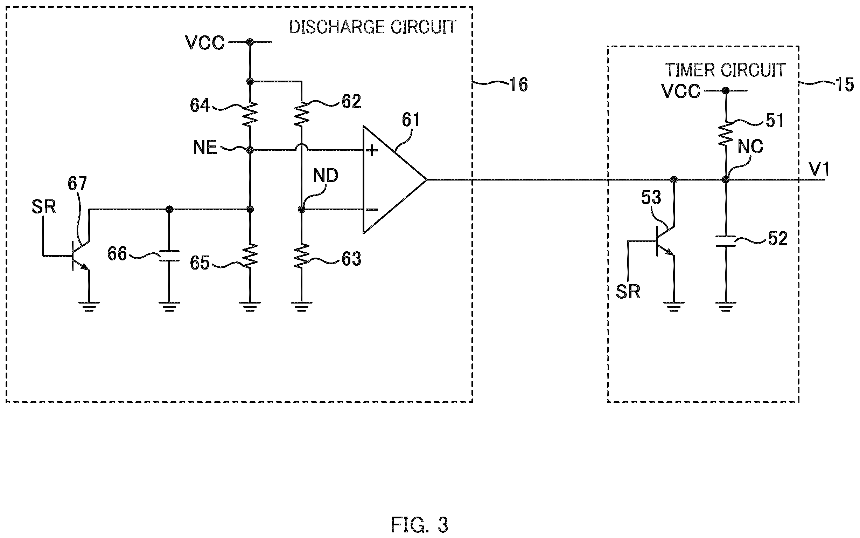

Fig. 3 is a diagram illustrating an example of the timer circuit 15 and the discharge circuit 16.

As illustrated in Fig. 3, the timer circuit 15 includes a resistor 51, a capacitor 52, and an NPN transistor 53.

The voltage VCC is applied to one end of the resistor 51 through the power supply line L1. The resistor 51 corresponds to a "first resistor."

The capacitor 52 is connected between the other end of the resistor 51 and the ground. The connection point between the resistor 51 and the capacitor 52 is referred to as node NC. The voltage at the node NC (hereinafter, also referred to as voltage V1) is the output of the timer circuit 15. The capacitor 52 corresponds to a "first capacitor."

In response to the voltage VCC being applied to the resistor 51, a current corresponding to the resistance value of the resistor 51 flows toward the capacitor 52. The capacitor 52 accumulates charge, and the voltage V1 at the node NC gradually increases as the charging progresses. This voltage V1 is applied to the non-inverting input terminals (- terminals) of the comparators COM1 to COM4 as described above. The voltage V1 is also supplied to the switch circuit 18 as will be described later.

The NPN transistor 53 is an element to discharge the capacitor 52. The collector of the NPN transistor 53 is connected to the node NC, and the emitter thereof is grounded. A signal SR from a reset circuit 17, which will be described later, is applied to the base of the NPN transistor 53. When the signal SR is high, the NPN transistor 53 is on. As a result, the charge accumulated in the capacitor 52 is discharged.

### <Discharge Circuit 16>

As illustrated in Fig. 3, the discharge circuit 16 includes a comparator 61, resistors 62 to 65, a capacitor 66, and an NPN transistor 67.

The + terminal of the comparator 61 is connected to the connection point (hereinafter, node ND) between the resistor 62 and the resistor 63 that divide the voltage VCC, and the divided voltage of the power supply voltage VCC obtained by the resistors 62 and 63 is applied thereto. The - terminal of the comparator 61 is connected to the connection point (hereinafter, node NE) between the resistor 64 and the resistor 65 that divide the voltage VCC, and the divided voltage of the power supply voltage VCC obtained by the resistors 64 and 65 is applied thereto. The output of the comparator 61 is connected to the node NC of the timer circuit 15.

The comparator 61 outputs high impedance when the voltage at the + terminal thereof is greater than the voltage at the - terminal thereof, and outputs a voltage at the low level (ground level) when the voltage at the + terminal thereof is smaller than the voltage at the - terminal thereof. The resistance values of the resistors 62 and 63 and the resistors 64 and 65 are set such that the voltage at the node ND is slightly higher than the voltage at the node NE in an initial state (state in which the capacitor 66 is not charged).

The capacitor 66 is provided between the node NE and the ground. Accordingly, in response to the voltage VCC being applied to the power supply line L1, current flows to the capacitor 66 through the resistor 64 and the node NE. As a result, the capacitor 66 is charged, and thus the voltage at the node NE also rises and then (after a certain time period) exceeds the voltage at the node ND.

Thus, the output of the comparator 61 is low for a certain time period in response to the voltage VCC being applied to the power supply line L1, and then achieves high impedance in response to the voltage at the node NE exceeding the voltage at the node ND. During this certain time period, since the output of the comparator 61 is low, the discharge circuit 16 discharges the capacitor 52 of the timer circuit 15 through the comparator 61.

The NPN transistor 67 is an element to discharge the capacitor 66. The collector of the NPN transistor 67 is connected to the node NE, and the emitter thereof is grounded. The signal SR from the reset circuit 17, which will be described later, is applied to the base of the NPN transistor 53. When the signal SR is high, the NPN transistor 53 is on. Accordingly, the charge accumulated in the capacitor 66 is discharged.

### <Reset Circuit 17>

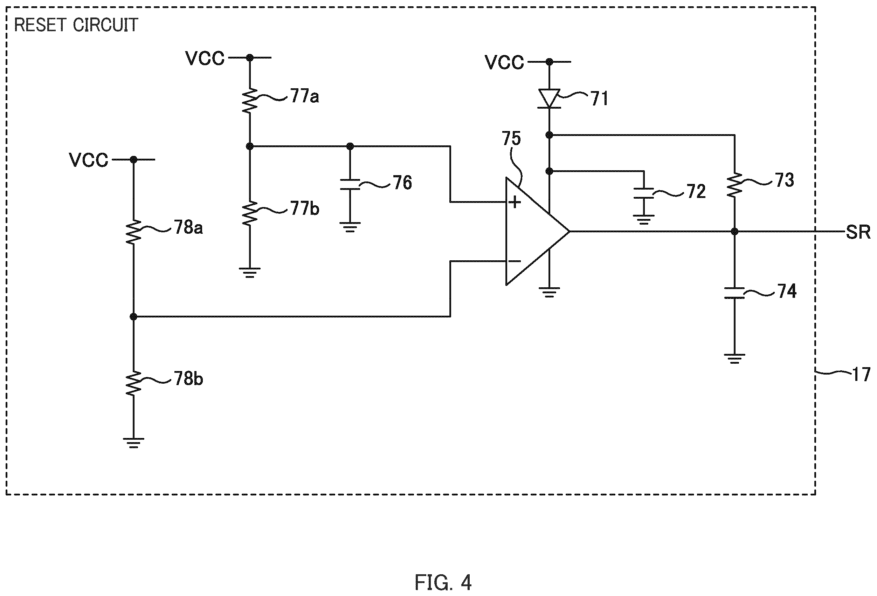

Fig. 4 is a diagram illustrating an example of the reset circuit 17.

As illustrated in Fig. 4, the reset circuit 17 includes a diode 71, capacitors 72, 74, and 76, and resistors 73, 77a, 77b, 78a, and 78b.

The comparator 75 operates in response to the voltage VCC being applied through a diode 71 for reverse current prevention. Between the cathode of the diode 71 and the ground, a resistor 73 and a capacitor 74 connected in series and a capacitor 72 are provided in parallel. The output of the comparator 75 is connected to the connection point between the resistor 73 and the capacitor 74, and the voltage at this connection point is the output (signal SR) of the reset circuit 17.

The resistors 77a and 77b are connected in series, and the resistors 78a and 78b are connected in series, and each pair of them divides the voltage VCC. the capacitor 76 is provided at the connection point between the resistor 77a and the resistor 77b, so as to be in parallel with the resistor 77b.

The voltage at the connection point between the resistor 77a and the resistor 77b is applied to the + terminal of the comparator 75, and the voltage at the connection point between the resistor 78a and the resistor 78b is applied to the - terminal thereof.

The resistors 77a and 77b and the resistors 78a and 78b are set such that when the voltage VCC is applied to the power supply line L1, the voltage at the connection point between the resistors 78a and 78b exceeds the voltage at the connection point between the resistors 77a and 77b.

Thus, during the time period during which the voltage VCC is being applied to the power supply line L1, the output of the comparator 75 is low, and the signal SR is also low. During this time period, each of the capacitors 72, 74 and 76 is charged.

Thereafter, in response to the voltage VCC ceasing to be applied to the power supply line L1, the comparator 75 operates for a certain time period using the charge voltage of the capacitor 72 as a power source. In this event, the voltage at the connection point between the resistors 78a and 78b reaches zero, but the voltage at the connection point between the resistors 77a and 77b exceeds zero, due to the charge voltage of the capacitor 76. Accordingly, the voltage at the + terminal thereof exceeds the voltage at the - terminal, and thus the comparator 75 achieves high impedance, and the voltage based on the charge voltage of the capacitor 74 is outputted, resulting in the signal SR going high.

In this way, in response to the voltage VCC ceasing to be applied from the state in which the voltage VCC is being applied to the power supply line L1, the reset circuit 17 outputs the high signal SR for a certain time period.

### <Switch Circuits 18 and 19>

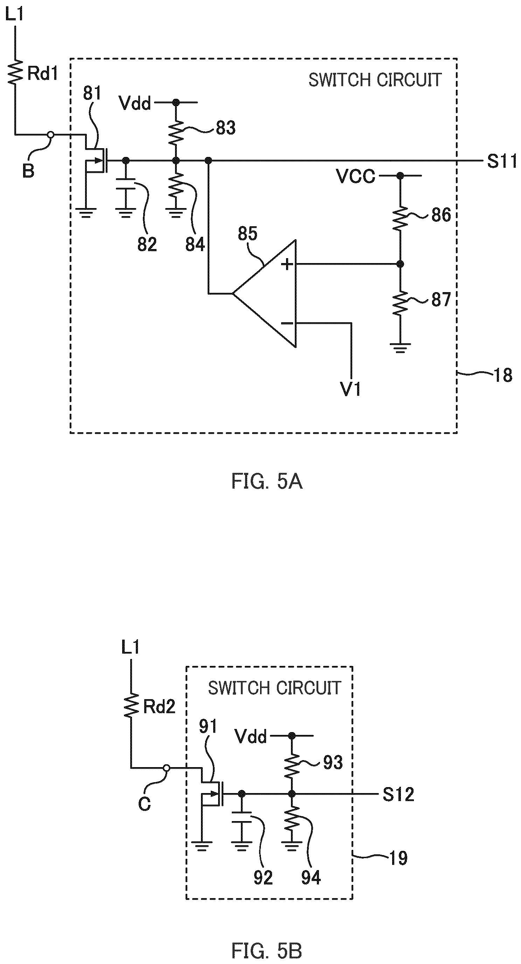

Fig. 5A is a diagram illustrating an example of the switch circuit 18. Fig. 5B is a diagram illustrating an example of the switch circuit 19.

As illustrated in Fig. 5A, the switch circuit 18 includes the NMOS transistor 81, a capacitor 82, resistors 83 and 84, a comparator 85, and resistors 86 and 87.

The NMOS transistor 81 has a function of a switch that is turned on and off according to the voltage applied to the gate thereof. The drain of the NMOS transistor 81 is connected to the resistor Rd1 through the terminal B, and the source thereof is grounded. The gate of the NMOS transistor 81 is connected to the connection point between the resistors 83 and 84 that divide the voltage Vdd. The signal S11 and the output of the comparator 85 are applied to the connection point between the resistors 83 and 84.

The capacitor 82 is an element to stabilize the gate voltage of the NMOS transistor 81, and is provided between the gate of the NMOS transistor 81 and the ground.

The + terminal of the comparator 85 is connected to the connection point between the resistors 86 and 87 that divide the voltage VCC, and the - terminal thereof is applied with the voltage V1. The comparator 85 outputs the low level when the voltage at the + terminal is smaller than the voltage at the - terminal, and achieves high impedance when the voltage at the + terminal is greater than the voltage at the - terminal.

In an embodiment of the present disclosure, the resistance values of the resistors 86 and 87 are set such that the divided voltage of the voltage VCC obtained by the resistors 86 and 87 is slightly lower than the voltage at the node N3 in Fig. 1.

With a configuration described above, in response to the voltage VCC being applied to the power supply line L1, the switch circuit 18 turns on the NMOS transistor 81 and starts supplying current from the power supply line L1 to the resistor Rd1. When the NMOS transistor 81 is turned off in response to the signal S11 or the output of the comparator 85, the switch circuit 18 interrupts the current supply path from the power supply line L1 to the resistor Rd1.

As illustrated in Fig. 5B, the switch circuit 19 includes the NMOS transistor 91, a capacitor 92, and resistors 93 and 94.

The NMOS transistor 91 has a function of a switch that is turned on and off according to the voltage applied to the gate thereof. The drain of the NMOS transistor 91 is connected to the resistor Rd1 through the terminal C, and the source thereof is grounded. The gate of the NMOS transistor 91 is connected to the connection point between the resistors 93 and 94 that divide the voltage Vdd. The signal S12 is applied to the connection point between the resistors 93 and 94.

The capacitor 92 is an element to stabilize the gate voltage of the NMOS transistor 91, and is provided between the gate of the NMOS transistor 91 and the ground.

With a configuration described above, in response to the voltage VCC being applied to the power supply line L1, the switch circuit 19 turns on the NMOS transistor 91 and starts supplying the current from the power supply line L1 to the resistor Rd2. When the NMOS transistor 91 is turned off in response to the signal S12, the switch circuit 19 interrupts the current supply path from the power supply line L1 to the resistor Rd2.

### <<<Operation of Lighting Circuit 10>>>

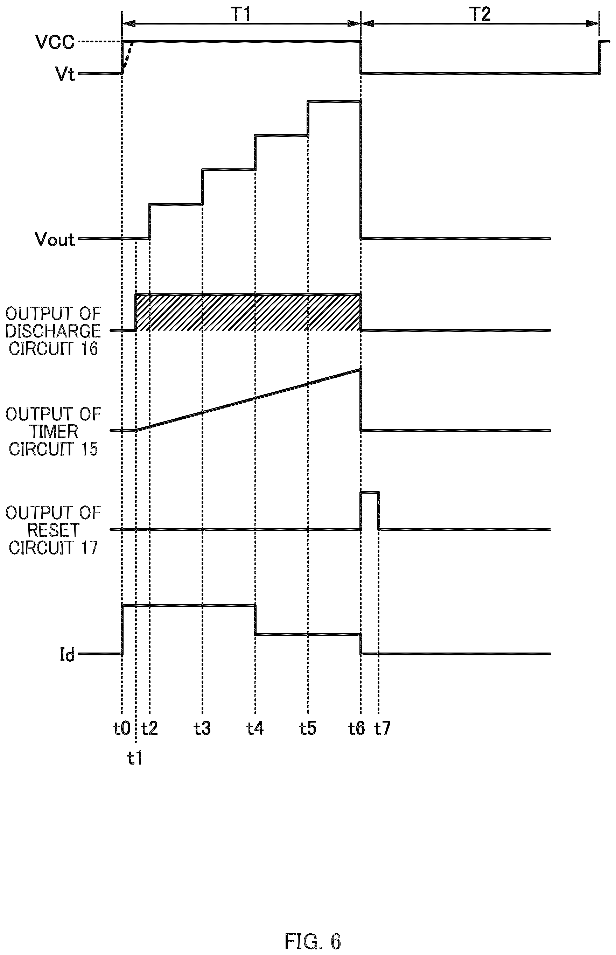

Fig. 6 is a diagram for explaining an operation of the lighting circuit 10. In the output of the discharge circuit 16 in Fig. 6, the portion hatched with diagonal lines indicates high impedance.

The vehicle lamp 1 according to an embodiment of the present disclosure is a turn signal lamp, and for example, in response to the driver of the vehicle operating a direction indicator (not illustrated) to turn on the vehicle lamp 1, a control circuit (not illustrated) such as a microcomputer controls turning on and off of the switch 4.

Turning on and off the switch 4 generates a voltage (hereinafter, also referred to as turn voltage Vt) having a time period T1 of the high level and a time period T2 of the low level that are alternately repeated with a predetermined period. Specifically, during the time period T1, the switch 4 is on, thereby applying the voltage VCC to the power supply line L1, and thus the turn voltage Vt is high. On the other hand, during the time period T2, the switch 4 is off, thereby not applying the voltage VCC to the power supply line L1, and thus the turn voltage Vt is low. Fig. 6 illustrates about one period of the turn voltage Vt, and the time period T1 and the time period T2 are repeated periodically. In other words, the voltage VCC is periodically applied to the power supply line L1.

In Fig. 6, the difference in the rise of the turn voltage Vt caused by the difference in the wiring length (wiring resistance) from the battery 2 to each lamp of the vehicle is conceptually illustrated by a solid line and a broken line. For example, when the battery 2 is arranged in the front of the vehicle body as in an embodiment of the present disclosure, the solid line indicates the case of the front of the vehicle body, and the broken line indicates the case of the rear of the vehicle body. In the rear of the vehicle body, which is away from the battery 2, the wiring resistance increases, and thus the rise is delayed (the waveform or the rise of the turn voltage Vt is inclined) as illustrated by the broken line in the figure compared to that in the front of the vehicle body. Hereinafter, an operation in the case of mainly the solid line will be described.

Before time t0, the turn voltage Vt is low, and the voltage VCC is not applied to the power supply line L1. Accordingly, the power of the battery 2 is not supplied to the lighting circuit 10, and thus the operations of the circuits are stopped. That is, the output voltage Vout of the lighting circuit 10 is zero, and the light sources 21 to 24 are turned off. All of the outputs of the discharge circuit 16, the timer circuit 15, and the reset circuit 17 are low, and the adjustment current Id flowing through the resistors Rd1 and Rd2 is also zero.

At time t0, the switch 4 is turned on, and the turn voltage Vt goes high. That is, the voltage VCC is applied to the power supply line L1. Accordingly, the voltage Vdd is generated in the power supply circuit 14 of the lighting circuit 10, and thus the NMOS transistors 81 and 91 of the switch circuits 18 and 19 are turned on. In response to the NMOS transistor 81 being turned on, the switch circuit 18 starts supplying current to the resistor Rd1 connected to the power supply line L1. Meanwhile, in response to the NMOS transistor 91 being turned on, the switch circuit 19 starts supplying current to the resistor Rd2 connected to the power supply line L1.

In this event, the adjustment current Id flowing from the power supply line to the resistors Rd1 and Rd2 is the sum of the current flowing through the resistor Rd1 and the current flowing through the resistor Rd2. The input current lin to the lighting circuit 10 is always greater than or equal to the adjustment current Id. Thus, with the magnitude of the adjustment current Id in this event being made larger than the lower limit value of the input current lin, it is possible to prevent erroneous detection by the detection device on the vehicle side caused by the input current lin decreasing below the lower limit value.

Further, in this event, the discharge circuit 16 in Fig. 3 operates and its output goes low, and thus the capacitor 52 of the timer circuit 15 in Fig. 3 is discharged (not charged). Accordingly, the output (voltage V1) of the timer circuit 15 is zero. Thus, the outputs of the comparators COM1 to COM4 in Fig. 1 achieve high impedance, all of the NMOS transistors Q1 to Q4 are turned on, and the drive current lout is not supplied to the light emitting elements D1 to D4 (the light sources 21 to 24 remain off). The comparator 85 of the switch circuit 18 in Fig. 5A is at high impedance because the voltage at the + terminal thereof is higher than the voltage at the - terminal thereof (output of the timer circuit 15).

At time t1, the output of the discharge circuit 16 achieves high impedance. Accordingly, the capacitor 52 of the timer circuit 15 starts being charged (charged with the voltage VCC), and the voltage V1 gradually rises. The time period from time t0 to t1 is a time period during which the discharge circuit 16 discharges the capacitor 52 of the timer circuit 15, and corresponds to a "first time period." As illustrated in Fig. 6, this time period is shorter than the time period T1 during which the turn voltage Vt is high.

At time t2, the output (voltage V1) of the timer circuit 15 exceeds the voltage at the node N1. As a result, the output of the comparator COM1 in Fig. 1 goes low, and the NMOS transistor Q1 is turned off. Thus, the drive current lout flows through the path of: the terminal D → the light source 21 (light emitting element D1) → the terminal E → the NMOS transistor Q2 → the ground, and the light source 21 is turned on.

At time t3, the output (voltage V1) of the timer circuit 15 exceeds the voltage at the node N2. Accordingly, the output of the comparator COM2 in Fig. 1 goes low, and the NMOS transistor Q2 is turned off. Thus, the drive current lout flows through the path of: the terminal D → the light source 21 (light emitting element D1) → the light source 22 (light emitting element D2) → the terminal F → the NMOS transistor Q3 → the ground, and the light source 21 and the light source 22 are turned on.

At time t4, the output (voltage V1) of the timer circuit 15 exceeds the voltage at the node N3. Accordingly, the output of the comparator COM3 in Fig. 1 goes low, and the NMOS transistor Q3 is turned off. Thus, the drive current lout flows through the path of: the terminal D → the light source 21 (light emitting element D1) → the light source 22 (light emitting element D2) → the light source 23 (light emitting element D3) → the terminal G → the NMOS transistor Q4 → the ground, and the light sources 21 to 23 are turned on.

Here, at time t4 (actually, before time t4), the voltage at the - terminal of the comparator 85 of the switch circuit 18 illustrated in Fig. 5A exceeds the voltage at the + terminal thereof, and the output of the comparator 85 goes low. In response to the output of the comparator 85 going low, the voltage at the connection point between the resistors R86 and R87 drops below the threshold voltage of the NMOS transistor 81, and the NMOS transistor 81 is turned off, and thus the supply of the current to the resistor Rd1 is stopped. That is, the switch circuit 18 interrupts the current supply path from the power supply line L1 to the resistor Rd1 after the light source 22 (light emitting element D2) is turned on. In this case, the light source 22 corresponds to a "predetermined light source." Accordingly, as illustrated in Fig. 6, the magnitude of the adjustment current Id decreases at time t4. By reducing the adjustment current Id in this way, it is possible to prevent the input current lin from exceeding the upper limit value (so as to fall within the allowable range) when the number of light sources to be turned on increases.

At time t5, the output (voltage V1) of the timer circuit 15 exceeds the voltage at the node N4. Accordingly, the output of the comparator COM4 in Fig. 1 goes low, and the NMOS transistor Q4 is turned off. Thus, the drive current lout flows through the path of: the terminal D → the light source 21 (light emitting element D1) → the light source 22 (light emitting element D2) → the light source 23 (light emitting element D3) → the light source 24 (light emitting element D4) → the terminal H → the ground, and all the light sources 21 to 24 are turned on.

At time t6 (after the time period T1 has elapsed since time t0), the turn voltage Vt goes low. Accordingly, the voltage VCC is not applied to the power supply line L1. With the voltage VCC not being applied to the power supply line L1, the operations of the circuits are stopped, and the light sources 21 to 24 are turned off. However, the reset circuit 17 in Fig. 4 operates with the voltage of the capacitor 72 and outputs the high signal until time t7. The charges of the capacitors and the like of the circuits are discharged in response to this high signal. Accordingly, when the capacitor is charged next, charging is started always from an empty state (state in which charges are not accumulated), and thus the relationship between charging time and voltage is precisely controlled.

The time period from time t6 to t7 corresponds to a "second time period." As illustrated in Fig. 6, this time period is shorter than the time period T2 during which the turn voltage Vt is low.

In response to the time period T2 having elapsed since time t6, the turn voltage Vt goes high. The same operation is repeated hereinafter.

Here, if the discharge circuit 16 is not provided, charging of the capacitor 52 of the timer circuit 15 is started at time t0 in Fig. 6. In this event, if there is a difference (solid line and broken line) in the rise of the turn voltage Vt as illustrated in Fig. 6 due to wiring resistance and the like in the lamps of the vehicle, the charge voltages of the capacitors 52 of the lamps become different, which may result in variations in the lighting timings.

Whereas, in an embodiment of the present disclosure, the discharge circuit 16 is provided, and the discharge circuit 16 discharges the capacitor 52 of the timer circuit 15 for a certain time period (time period from time t0 to t1). Thus, as illustrated in the figure, even when there is a difference in the rise of the turn voltage Vt, it is possible to improve the accuracy of the lighting timings of the lamps at the respective positions of the vehicle.

Further, the voltage Vbat (voltage VCC) of the battery 2 is not always constant, and changes in a range of from 9 V to 16 V, for example. In an embodiment of the present disclosure, the resistors R1 to R5 divide the voltage VCC into multiple voltages, and the charge voltage of the capacitor 52 of the timer circuit 15 depends on the voltage VCC. Since the lighting circuit 10 sequentially lights the light sources 21 to 24, based on a comparison between the divided voltage obtained by the resistors R1 to R5 and the charge voltage (voltage V1) of the capacitor 52, the accuracy of the lighting timing can be improved even when the magnitude of the voltage VCC changes.

### <When Disconnection is Detected>

In response to disconnection being detected by the disconnection detection circuit 12 during the time period T1, the turn-off circuit 13 in Fig. 2 causes the signals S10, S11, and S12 to be low and held low. The driving circuit 11 stops operating in response to the low signal S10. This turns off all the light sources. In response to the signals S11 and S12 going low, both of the NMOS transistor 81 of the switch circuit 18 in Fig. 5A and the NMOS transistor 91 of the switch circuit 19 in Fig. 5B are turned off. Thus, the switch circuit 18 interrupts the current supply path from the power supply line L1 to the resistor Rd1, and the switch circuit 19 interrupts the current supply path from the power supply line L1 to the resistor Rd2. Thus, the adjustment current Id reaches zero, thereby being able to prevent unnecessary power consumption.

In the lighting circuit 10 according to an embodiment of the present disclosure, the NMOS transistor Q1 provided between the output of the driving circuit 11 and the light source 21 (specifically, the anode of the light emitting element D1) has a function of turning off the light sources 21 to 24 all at once. That is, in response to the NMOS transistor Q1 being turned on, the drive current lout is not supplied to the light emitting elements D1 to D4, and thus all of the light sources 21 to 24 are turned off. Accordingly, a configuration may be such that for example, the turn-off circuit 13 controls the NMOS transistor Q1 to be forcibly turned on, when disconnection is detected by the disconnection detection circuit 12.

### ===Summary===

The lighting circuit 10 according to an embodiment of the present disclosure has been described above. The lighting circuit 10 is a lighting circuit applied to the vehicle lamp 1 including the light sources 21 to 24, and the lighting circuit includes: a circuit (voltage divider circuit) including the resistors R1 to R5; the timer circuit 15, the circuit (control circuit) including the comparators COM1 to COM4, the NMOS transistors Q1 to Q4, and the like, and the discharge circuit 16. The resistors R1 to R5 divide the power supply voltage VCC applied to the power supply line L1 into a plurality of (four in this case) voltages different from one another. The timer circuit 15 includes the resistor 51 configured to receive the power supply voltage VCC through the power supply line L1, and the capacitor 52 connected to the resistor 51. The control circuit sequentially turns on the light sources 21 to 24, based on the four voltages obtained by dividing with the resistors R1 to R5 and the voltage of the capacitor 52. The discharge circuit 16 discharges the capacitor 52 of the timer circuit 15 during a certain time period (time period from time t0 to t1 in Fig. 6), in response to the power supply voltage VCC being applied to the power supply line L1. Accordingly, in response to the power supply voltage VCC being applied to the power supply line L1, the timer circuit 15 does not immediately operate (operates after a certain time period) by virtue of the discharge circuit 16, thereby being able to suppress a lag in lighting timing caused by, for example, a difference in wiring length from the battery 2 to the position of each of the lamps of the vehicle body. Thus, the accuracy of the lighting timing can be improved.

The lighting circuit 10 further includes the reset circuit 17 that discharges the capacitor 52 during a certain time period (time period from time t6 to t7 in Fig. 6), in response to the voltage VCC ceasing to be applied to the power supply line L1. This makes it possible to reliably discharge the charges of the capacitor 52 during the above certain time period. Thus, the accuracy of the lighting start timing is further improved.

The lighting circuit 10 further includes the switch circuit 18 configured to start supplying current to the resistor Rd1 connected to the power supply line L1, in response to the voltage VCC being applied to the power supply line L1. The switch circuit 18 interrupts the current supply path from the power supply line L1 to the resistor Rd1, after a predetermined light source (light source 22 in an embodiment of the present disclosure) out of the light sources 21 to 24 is turned on based on the voltage of the capacitor 52. This makes it possible to prevent the input current lin from exceeding the upper limit value, when the number of light sources to be turned on increases.

The lighting circuit 10 further includes the switch circuit 19 configured to start supplying current to the resistor Rd2 connected to the power supply line L1, in response to the voltage VCC being applied to the power supply line L1, and the disconnection detection circuit 12 configured to detect whether there is an abnormality in at least one of the light sources 21 to 24. The switch circuit 18 interrupts the current supply path from the power supply line L1 to the resistor Rd1, in response to the disconnection detection circuit 12 detecting an abnormality. Further, the switch circuit 19 interrupts the current supply path from the power supply line L1 to the resistor Rd2, in response to the disconnection detection circuit 12 detecting an abnormality. This makes it possible to suppress unnecessary power consumption when an abnormality is detected. Further, during normal operation, passing current through the resistors Rd1 and Rd2 makes it possible to prevent the input current lin from decreasing below the lower limit value. Thus, for example, it is possible to prevent the detection device on the vehicle side from erroneously detecting that there is a disconnection in any of the light emitting elements D1 to D4 caused by the input current lin being small.

The vehicle lamp 1 is a turn signal lamp, and the voltage VCC is periodically applied to the power supply line L1. It is effective to apply the lighting circuit 10 to such a vehicle lamp 1.

Embodiment(s) of the present disclosure described above is/are simply to facilitate understanding of the present disclosure and is/are not in any way to be construed as limiting the present disclosure. The present disclosure may variously be changed or altered without departing from its essential features and encompass equivalents thereof.

In the embodiment(s) described above, the vehicle lamp 1 is provided with the four light sources 21 to 24, but the number of light sources is not limited to four, and may be any plural number.

In the embodiment(s) described above, switches (NMOS transistors Q1 to Q4) are respectively provided between the ground and the anode of the light emitting element D1 and the cathodes of the light emitting elements D1 through D3, and the light sources 21 to 24 are sequentially turned on by turning on/off the switches, but the present disclosure is not limited thereto. For example, the light emitting elements D1 to D4 and the switches (NMOS transistors Q1 to Q4) may be connected in parallel, and the light emitting elements D1 to D4 may be sequentially turned on by the sequential method by turning on/off the switches.

In the embodiment(s) described above, the case of a turn signal has been described, but the present disclosure can be similarly applied to the case of a hazard. In particular, in the case of a hazard, the number of lamps to be turned on is large as described above, and thus it is more effective since the lighting timings of the lamps can be synchronized according to an embodiment of the present disclosure.

### [Reference Signs List]

1 Vehicle lamp
2 Battery
4 Switch
10 Lighting circuit
11 Driving circuit
12 Disconnection detection circuit
13 Turn-off circuit
14 Power supply circuit
15 Timer circuit
16 Discharge circuit
17 Reset circuit
18, 19 Switch circuit
21 to 24 Light source
31 Capacitor
32 PNP transistor
33 Diode
35 NMOS transistor
34, 36, 37 Resistor
38a to 38c Schottky barrier diode
51 Resistor
52 Capacitor
53 NPN transistor
61 Comparator
62 to 65 Resistor
66 Capacitor
67 NPN transistor
71 Diode
72, 74, 76 Capacitor
73, 77a, 77b, 78a, 78b Resistor
75 Comparator
81, 91 NMOS transistor
82, 92 Capacitor
83, 84, 86, 87, 93, 94 Resistor
85 Comparator
A to H Terminal
D1 to D4 Light emitting element
R1 to R5, R11 to R18, Rd1, Rd2 Resistor
COM1 to COM4 Comparator
Q1 to Q4 NMOS transistor
VCC Power supply voltage
Vdd Voltage
Vout Output voltage
lin Input current
Id Adjustment current

## Claims

1. A lighting circuit applied to a vehicle lamp including a plurality of light sources, the lighting circuit comprising:
a voltage divider circuit configured to divide a power supply voltage applied to a power supply line into a plurality of voltages different from one another;
a timer circuit including
a first resistor configured to receive the power supply voltage through the power supply line, and
a first capacitor connected to the first resistor;
a control circuit configured to sequentially turn on the plurality of light sources, based on the plurality of voltages of the voltage divider circuit and a voltage of the first capacitor; and
a first discharge circuit configured to discharge the first capacitor during a first time period, in response to the power supply voltage being applied to the power supply line.

2. The lighting circuit according to claim 1, further comprising:
a second discharge circuit configured to discharge the first capacitor during a second time period, in response to the power supply voltage ceasing to be applied to the power supply line.

3. The lighting circuit according to claim 1, further comprising:
a first current adjustment circuit configured to start supplying current to a second resistor connected to the power supply line, in response to the power supply voltage being applied to the power supply line, wherein
the first current adjustment circuit interrupts a current supply path from the power supply line to the second resistor, after a predetermined light source out of the plurality of light sources is turned on based on the voltage of the first capacitor.

4. The lighting circuit according to claim 3, further comprising:
a second current adjustment circuit configured to start supplying current to a third resistor connected to the power supply line, in response to the power supply voltage being applied to the power supply line; and
a detection circuit configured to detect whether there is an abnormality in at least one of the plurality of light sources, wherein
the first current adjustment circuit interrupts the current supply path from the power supply line to the second resistor, in response to the detection circuit detecting an abnormality, and
the second current adjustment circuit interrupts a current supply path from the power supply line to the third resistor, in response to the detection circuit detecting an abnormality.

5. The lighting circuit according to any one of claims 1 to 4, wherein
the vehicle lamp is a turn signal lamp, and
the power supply voltage is periodically applied to the power supply line.
